# EUROPEAN PATENT APPLICATION

(11) **EP 1 727 254 A2**
(43) Date of publication of application: **29.11.2006**
(21) Application number: 06009928.0
(22) Date of filing: 15.05.2006
(51) Int. Cl.: H02G 3/12

(54) **Box for wiring accessory inserts in electrical installations**

(30) Priority: 23.05.2005 IT VE20050031
(71) Applicant: Chinello, Giannino, 35028 Piove di Sacco (IT)
(72) Inventor: Chinello, Giannino, 35028 Piove di Sacco (IT)
(74) Representative: Piovesana, Paolo

(57) **Abstract**

A box for wiring accessory inserts in electrical installations, characterised by comprising a substantially parallelepiped base (2) with four side walls (4) and a bottom wall (6), to be rigidly fixed into a corresponding seat in the masonry structure, and a wiring accessory insert plate support element (18) which is slidable relative to said parallelepiped base (2) perpendicular to the exposed surface of said masonry structure, said support element (18) comprising receptacles (30) for the mortar which fixes the element to said base (2) in the desired position, a push-out front closure (24) and means (26, 28) below this latter for fixing said insert plate.

## Description

The present invention relates to a box for wiring accessory inserts in electrical installations.

Wiring accessory boxes for electrical installations are known consisting of a hollow plastic parallelepiped body of standard dimensions, which is positioned in a recess formed in masonry while in its rough state and fixed by mortar. It is provided on the edge of its two smaller walls with metal strips comprising a threaded hole for applying the fixing screws of a traditional support plate for the wiring accessory inserts.

A drawback of these known boxes is that during their fixing into the corresponding recess with mortar, they may be too deeply inserted into or project too much from the finished surface of the brick wall, with the result that the bricklayer has to apply an additional layer of mortar or even break the wall to reposition the box.

Moreover the outer surface of the base of known wiring accessory boxes does not provide an effective grip for the mortar, resulting in uncertain stabilization of the box in its seat and a risk of its detachment during application of the flexible conduit through which the electric cables pass.

The expedient of using a greater quantity of mortar to fix the box in its seat is also unsatisfactory, ,because
- an excess of mortar may fall out of the recess, given its semi-fluid nature and its weight,
- if the box is positioned incorrectly, a certain effort is required for its removal because of the need to break the mortar, if applied in large.quantity,
- as the mortar quantity increases, the box instability prior to mortar hardening also increases,
- the preceding drawback results in time loss in manually holding the box at least until the mortar hardening process has commenced,
- as the mortar is applied, especially if in excess, it may enter the box cavity intended to house the wiring accessory inserts, with the need for its subsequent removal. It can also block the threaded holes provided in the fixing strips for the insert support plate.

All these drawbacks are eliminated according to the invention by a box for wiring accessory inserts in electrical installations, as described in claim 1.

A preferred embodiment of the present invention is further clarified hereinafter with reference to the accompanying drawings, in which:

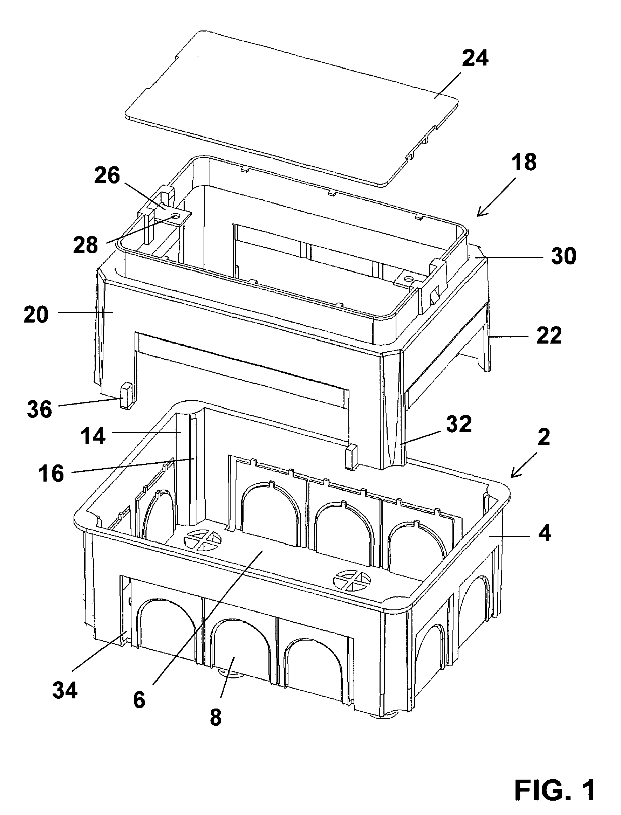

Figure 1 is an exploded perspective view of a box for wiring accessory inserts according to the invention,

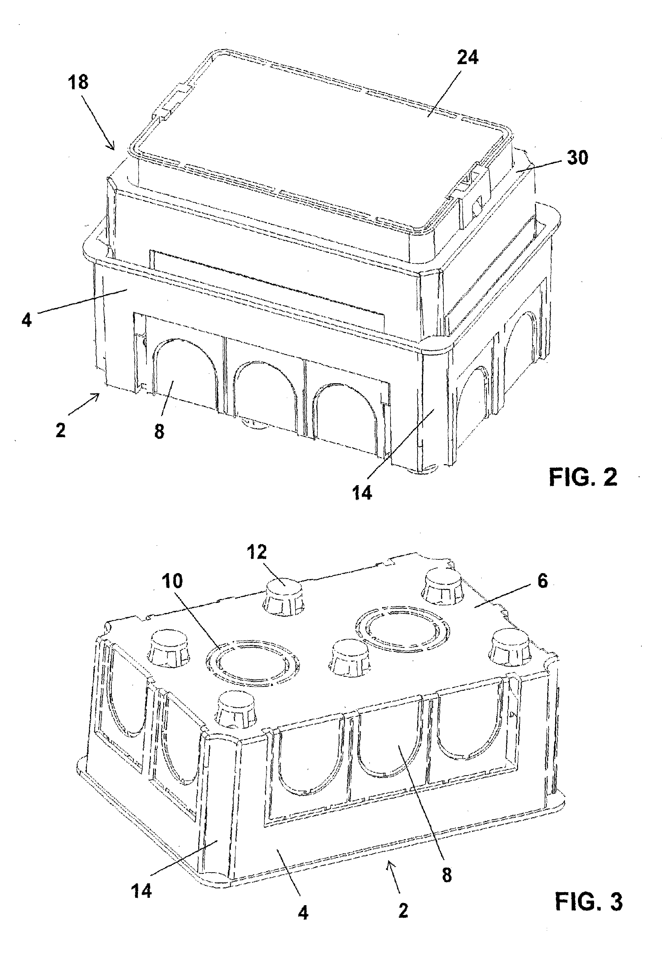

Figure 2 shows it in its assembled condition, and
Figure 3 is a perspective view of the box base seen from below.

As can be seen from the figures, the wiring accessory box of the invention comprises a parallelepiped base 2 with four side walls 4 and a bottom wall 6. Each side wall 4 comprises push-out regions 8 which, when removed, form the passageway for the flexible conduits.

Likewise, the bottom wall 6 comprises push-out regions 10 for other flexible conduits, and is also provided with gripping projections 12 for the mortar used to fix the base 2 into a recess previously formed in the masonry structure to which the box of the invention is to be applied.

The corners of the base 2, perpendicular to the bottom wall 6, are slightly convex inwards, the centre of the convex part 14 being provided with an inner guide rib 16, the purpose of which will be apparent hereinafter.

The box of the invention also comprises a support element for a traditional wiring insert plate. This support element is indicated overall by the number 18 and comprises a parallelepiped portion 20 provided with four guide feet 22.

The parallelepiped structure 4 comprises four side walls and a push-out front closure portion 24, below which there are provided two small metal strips 26 applied to the two smaller side walls and centrally provided with a threaded hole 28.

The four walls of the parallelepiped portion 20 also comprise a perimetral step 30, which surrounds the push-out front closure portion 24.

Each of the two feet 22 presents a pair of ribs 32 positioned at 90° apart to embrace the corresponding convex portions 14 provided in the four corners of the base 2 and to hence guide the telescopic movements of the element 18 relative to the base 2, by virtue of the presence of the ribs 16. For this purpose the dimensions of the mutually interacting parts are such as to make these telescopic movements possible, the longitudinal dimension of the element 18 being such that the distance between axes of the two holes 28 is equal to the distance between axes of the holes in the two metal strips provided in traditional wiring boxes, and hence also corresponds to the dimensions of traditional wiring insert plates.

In order to further guide the telescopic movements of the element 18 relative to the base 2, this latter is provided in its two larger side walls, in proximity to the convex corners 14, with longitudinal slots 34 along which corresponding appendices 36 provided at the free end of the feet 22 of the element 18 can slide.

The wiring accessory box of the invention is used in the following manner:
when the recesses and the chases leading to them have been formed in the rough masonry, cement mortar is applied to the bottom of each recess, and the base 2 of the box is pressed in so that the projections 12 grip the mortar. Before this operation, the push-out regions 10 through which the flexible conduits, if present, are to be passed are removed from the bottom wall 6 of the base 2.

When the mortar has set, the installer removes the push-out portions 8 through which other flexible conduits are to be passed, then inserts the support element 18 into the base 2. By virtue of the engagement between the ribs 32 of the feet 22 and the convex portions, and between the projections 36 and the slots 34, the support element 18 remains securely fixed to the base 2, although being able to slide telescopically relative thereto.

When the wall is to be plastered, the bricklayer arranges the element 18 with its push-out base 24 flush with the future finished surface of the plastered wall, during which the mortar may completely fill the perimetral step of the element 18, so stabilizing the element within the base 2, however it is unable to enter this latter because of the presence of the front wall 24.

When the plaster has set, the push-out front wall 24 can be removed, to make the interior of the box formed by the base 2 and the support element 18 accessible, and at the same time making the strips 26 accessible to enable a traditional wiring insert plate (not shown) to be applied to them.

From the aforegoing it is apparent that wiring accessory box of the invention is particularly advantageous compared with traditional boxes, and in particular:
- it enables the wiring accessory box to be easily, rapidly and comfortably positioned in the recess provided within the masonry wall, flush with the plaster,
- it enables the connections to be made easily, as the box is freely positionable within the recess,
- it ensures reliable stabilization of the base 2 within the recess, by virtue of the presence of the gripping projections 12 on the base,
- it is deeper than current wiring accessory boxes, so offering a better housing for the cables connected to the inserts,
- when the support element 18 is being fixed to the base 2 with mortar, the mortar is unable to enter the box, and in particular cannot obstruct the threaded holes for fixing the insert plate.

## Claims

1. A box for wiring accessory inserts in electrical installations, **characterised by** comprising a substantially parallelepiped base (2) with four side walls (4) and a bottom wall (6), to be rigidly fixed into a corresponding seat in the masonry structure, and a wiring accessory insert plate support element (18) which is slidable relative to said parallelepiped base (2) perpendicular to the exposed surface of said masonry structure, said support element (18) comprising receptacles (30) for the mortar which fixes the element to said base (2) in the desired position, a push-out front closure (24) and means (26, 28) below this latter for fixing said insert plate.

2. A box as claimed in claim 1, **characterised in that** the side walls (4) and/or the bottom wall (6) comprise predetermined push-out regions (8, 10) for the passage of flexible conduits.

3. A box as claimed in claim 1, **characterised in that** the bottom wall (6) comprises projections (12) for gripping the mortar.

4. A box as claimed in claim 1, **characterised in that** the support element (18) comprises a parallelepiped portion (20) and four guide feet (22) extending therefrom.

5. A box as claimed in claim 4, **characterised in that** the corners of the parallelepiped base (2) and the feet (22) of the support element (18) present mutually engaging curved profiles.

6. A box as claimed in claim 5, **characterised in that** the curved corners (16) of the parallelepiped base (2) comprise longitudinal ribs (32) engaging the curved corners of the feet (22) of the support element (18).

7. A box as claimed in claim 4, **characterised in that** the free end of the feet (22) is provided with projecting appendices (36) which slidably engage in longitudinal guide slots (34) provided in the side walls (4) of the parallelepiped base 2.

8. A box as claimed in claim 1, **characterised in that** the receptacles for the mortar consist of a perimetral step (30) surrounding the front push-out closure (24) of the support element (18).

9. A box as claimed in claim 1, **characterised in that** the support element (18) is provided, in a position below the front push-out closure (24), with metal strips (26) provided with a hole (28) for fixing the wiring accessory insert plate.
